# EUROPEAN PATENT APPLICATION

(11) **EP 2 521 007 A1**
(43) Date of publication of application: **07.11.2012**
(21) Application number: 11161459.0
(22) Date of filing: 03.05.2011
(51) Int. Cl.: G06F 3/01

(54) **Method for object 3D position identification based on multiple image analysis applying to gaze tracking**

(71) Applicant: Technische Universität Dresden, 01069 Dresden (DE)
(72) Inventor: Velichkovksy, Boris, 01069, Dresden (DE); Shevchik, Sergei, 115407, Moskau (RU)
(74) Representative: Lippert, Stachow & Partner

(57) **Abstract**

The invention relates to gaze direction registration systems, for estimating the 3D position of the user's eye and the calculation of the point of interest. The invention uses set of images obtained with such standard image registration methods (CCD or CMOS) in such that the registration cameras (105, 110 and 115) are placed in such position (106, 111 and 116) that their optical axes (107, 112 and 117) intersects each other. A virtual model of the cameras optical axes (107, 112 and 117) is formed, whereby the positions of the cameras optical axes (107, 112 and 117) are described by the equations of the straight line in 3D space. While the eye identification is carried out the distance of its center to the center of the image is calculated in pixels. This is carried out for all images of the image set. After that the position of eye in 3D space is calculated using the virtual model and distance from eye center to optical axes (107, 112 and 117) of registration cameras (105, 110 and 115), obtained on the previous step.

## Description

The invention relates to gaze direction registration systems, for estimating the 3D position of the user's eye and the calculation of the point of interest. This invention relates more specifically to a free motion eye tracking system without the need of calibration.

### BACKGROUND OF THE INVENTION

Today eye gaze tracking systems have been proven to be useful in human-machine interfaces. Such systems become more and more prominent in applications like assisting disabled people to interact with personal computer or the like, thereby restoring a part of communication possibilities of these people with the environment.

Other fields of these applications are within commercial use, like in aviation systems, heavy machine vehicles or the like, where multitasking applications have to be carried out. Other application possibilities are within research where is a significant interest in eye gaze tracking to better understand behavior and visual processes.

The interest in active vision has a long history (for a review see Wade & Tatler, 2005).

The first devices to make eye movement recordings were developed already 100 years ago (e.g. Dodge, 1900; Stratton, 1906). The early use of eyetracking in psychological research was often accompanied by severe inconveniences (e.g. vacuum devices were directly attached to the eyeball). Thus recording time was limited up to few minutes. Nowadays registering eye movements is more comfortable and often does not require any contact of the system to the head or body.

These advantages make it possible to measure eye movements for longer periods - in fact there are no time limits anymore. This technological progress makes eye tracking more and more appropriate for practical applications in industrial settings, as well as in studies of infants and of various patient groups.

For instance, patients suffering from a lack of possibilities communicate to the environment can benefit from eye typing systems to recover their communicative abilities (Bates, R., Donegan, M., lstance, H. O., Hansen, J. P., & Raiha, K.- J. (2007). Introducing COGAIN: Communication by gaze interaction. Universal Access in the Information; Pannasch, S., Helmert, J. R., Velichkovsky, B. M., Malischke, S., & Storch, A. (2008). Eye typing in application: A comparison of two systems with ALS patients. Journal of Eye Movement Research, 2(4), 6, 1-8).

With the everyday application of eye tracking, questions concerning the safety of this technique arise, especially when it is frequently used for longer time periods of days, months and years.

As a rule, today's contactless eyetracking systems use an infrared (IR) illumination produced via IR light-emitting diodes (LEDs). There are two reasons for this type of lighting in eyetracking systems. First of all, the use of a light source in the scene enhances the quality of the image in terms of contrast and intensity levels, and it facilitates detailed image analysis and gaze estimation. On the other hand, IR optical radiation is invisible to the human eye, so that the lighting is comfortable and does not distract user's attention. In addition, IR radiation is reflected by the corneal surface, creating bright reflection points, termed 'glints'. It is frequently assumed that the glint positions in the image do not change with eye rotations but only with eyeball translations, thus giving an easy to measure reference for head position. Recently, the initial assumption has been revisited (Guestrin & Eizenman, 2006, General theory of remote gaze estimation using the pupil center and corneal reflections. IEEE Transactions on Biomedical Engineering,53(6), 1124-1133.; Shih & Liu, 2004, A novel approach to 3-D gaze tracking using stereo cameras. IEEE Transactions on Systems Man and Cybernetics Part B - Cybernetics, 34(1), 234-245). In these alternative models for gaze estimation, the movement of the glint due to eyeball rotations is introduced and measured accordingly.

One particular measurement problem is related to biophysical aspects of the video-based eyetracking. Human vision is biologically adapted to protect itself against intense broad-band optical radiation (ultraviolet, visible and infrared radiant energy) from the natural environment. In addition, humans use protection, such as hats and sun glasses, to shield against the harmful effects upon the eye from intense ultraviolet (UV) radiation and blue light present in sunlight over snow or sand. The aversion reflex effectively limits the light exposure of retina to a fraction of a second (about 200 ms or less) and thus protects the eye against injury from viewing bright light sources, such as the sun, lamps, and welding arcs.

The infrared LEDs of modern eye trackers do not, however, produce an aversion response, as they are barely visible, and their emission is limited to the near-infrared (IR-A, from 760 to 1400 nm) spectral band. If incandescent or discharge lamps that have been filtered to block most visible light and transmit IR-A are employed, some noticeable emissions are possible outside the IR-A. These emissions must be measured and evaluated separately.

The interaction with technical devices in human-machine interfaces is carried out through calculation of point of interest on the surface of the object at which the gaze is currently directed. To carry out such calculations it is necessary to know the current direction of gaze and also position of eyes in 3D space.

Existing eye tracking systems are using passive or active (under additional light illumination of registration area in order to increase the contrast) image registration with detectors based on CCD or CMOS technologies.

There are several types of eye tracking systems that can realize the human-machine interfaces. The most precise systems that carry out measurements very accurately possess some weak sides restricting the practical implementation of these systems.

There were two main kinds of systems that may realize interaction with gaze. Some of them are head mounted systems (Hong Hua, Prasanna Krishnaswamy, and Jannick P. Rolland: Video-based eyetracking methods and algorithms in head-mounted displays. Optics Express, Vol.14 (10), pp. 4328-4350 (2006)), the other are remote contact systems (Andrew Duchowski: Eye Tracking Methodology - Theory and Practice, Second Edition, Springer, London 2007).

In head mounted systems the registration devices are fixed toward the head and it does not change. To estimate the 3D space position of eyes toward the objects at which one is looking additional external detectors are installed. Due to some equipment installed on the head this systems have some restrictions in use and mostly applied in conditions where operator has a helmet on his head (for example a cabin of the aircraft, cabin of building heavy machinery vehicle etc.). In all this cases the system is built in the helmet and detectors for 3D eye position identification in world coordinates are installed in the cabin. Also to cover a big area of registration one have to expand the external detectors net what is not possible in some applications. Such commercial systems are made by ISCAN Inc. (www.iscaninc.com), LC Technologies and Applied Science Laboratories.

The remote contact free systems are more widely used. Until recently the main restriction in such systems was a head fixation necessary for an accurate calculation, i.e. it was impossible to change the 3D position of eye and the gaze direction calculated on the data obtained from preliminary calibration. There is still large number of such systems but the number is decreased as now new systems appear which allow head movements. The main manufacturers of such systems are Tobii, MSI, SR research, DynaVox, Eye tech digital systems, Eye com.

In these systems the direction of the eye and its 3D position is calculated. But their implementation is rather restricted today, too. For example in Eye tech gaze tracker the freedom of head movement is allowed only in the area of 25 x 16 x 19 cm what is not good enough for using it in practical applications.

SR research in their Eyelink 1000 system gives broader area for free movement, but 3D eye position identification greatly depends on light source position that illuminates the eye (the camera also registers the light reflex on cornea with what the distance from light source to eye is estimated). Due to this the registration area could not be expanded to a degree needed in most applications.

As discussed above the area of 3D eye position estimation is strongly restricted in modern systems (both head mounted and remote contact systems). This is the main factor that restricts their implementation in a large number of practical applications.

Another problem of most of the known eyetracking systems is the need for calibration to establish parameters to describe the mapping of camera image coordinates to display screen coordinates. Different calibration systems were known which calculate gaze direction on several mostly physically based parameters like eyeball radius, radius if curvature if the cornea and distance between center of the eyeball and center of the pupil.

Furthermore most of these eyetracking systems need some recalibration, especially to determine head position during head motion.

Such a recalibration method is described in US 5,016,282 A2, where three reference points on calibration glasses were used to create a model of the head and to determine the position and orientation of the head for the eye gaze tracking system.

Meanwhile calibration-free eye gaze tracking systems were developed. Such a calibration free system is described in US 6,578,962 B1, where an eye tracking system is disclosed using two cameras to identify and locate image aspects to compute a gaze vector.

Another calibration-free eye gaze tracking system is disclosed in US 7,306,337 B2 where a camera is used to obtain images of the eye, thereby determining glint and pupil and these obtained gaze data were used to determine eye gaze parameters. The gaze point is then calculated basing in these eye gaze parameters.

The above described free calibration methods suffer from several drawbacks since a more precise determination of the point of interest includes determining of the eye position in space as described above. The 3D eye position is therefore of much importance to achieve a better estimation of the point of interest.

### SUMMARY OF THE INVENTION

It is therefore an object of the present invention to provide a method for estimating the 3D position of the user's eye in space wherein calibration for individual user's eye is not required.

This object is solved by a method according to claim 1. Preferred embodiments are disclosed within the depending claims.

It is another object of the present invention to provide a system for estimating the 3D position of the user's eye in space.

This object is solved by a system according to claim 13. Preferred embodiments are disclosed within the depending claims.

According to one object of the present invention there is provided a calibration-free method of processing image data in a processing apparatus to perform estimation of 3D position of the eye in space across a set of image. The method comprises image capturing for photographing one object with at least three digital cameras. After that an image processing is performed with estimation of objects borders and objects position in the current image so that the objects position parameters can be determined. In addition a geometrical model which is connected with spatial cameras positions is created and the 3D position of object is calculated using the set of parameters obtained from the multiple images and the geometrical model.

The invention may further comprise that the registration cameras for image capturing are maintained in different positions and under different angles towards the object and each other in a way such that the optical axes of the cameras form intersection straight lines.

The invention may further comprise different configurations of registration cameras.

The invention may further comprise image processing in a processing apparatus thereby finding the point of interest, which belongs to the object, and estimating such parameter, as distance from the image center to this point.

The invention may further comprise that the estimated parameter, obtained by image processing, corresponds to the distance between the image center and some objects point, whereby the distance is obtained in pixels.

The invention may further comprise a method of creation of a virtual geometrical model of the spatial cameras positions, wherein the 3D position of optical axes of registration cameras are defined in world coordinates. Such coordinates may be obtained by Global Positioning System (GPS), NAVSTAR GPS or the like.

The invention may further comprise that the description of the optical axes in 3D space can be obtained in the world coordinate system. The optical axes of registration cameras can be defined in a vector-parametric form.

The invention may further comprise that the equations of the optical axes of the image registration cameras can be obtained in the coordinate system, which is connected with the cameras.

The invention may further comprise that the calculation of the 3D space position of the point of interest according, wherein the 3D space position of the point of interest is calculated using a set of equations.

The invention may further comprise that the calculation of the 3D space position of the point of interest is calculated by using the distance from the image center to the point of interest position in the image as an additional term for object recognition.

The invention may further comprise the calculation of the 3D space position of the object's point of interest, wherein the position is calculated towards the image registration cameras optical axes.

The invention may further comprise the calculation of the 3D space position of the object's point of interest, wherein the 3D space position is used to verify the analysis of position of the point of interest towards the image center.

According to an object of the present invention there is provided a system for a calibration-free estimation of 3D position of an user's eye in space comprising at least three registration cameras for image capturing of at least one of an user's eye, said image having objects borders and objects position in the current image; wherein the cameras are placed in such positions that their optical axes intersects each other and a processing apparatus for performing image processing with estimation of objects borders and objects position in the current image, determining the objects position parameters, creating the geometrical model which is connected with spatial cameras positions, calculating 3D position of object using the set of parameters obtained from multiple images and the geometrical model.

The invention may further comprise that the processing apparatus is a personal computer or the like.

The invention may further comprise that the registration cameras are CCD (Charge-coupled Device) cameras.

The invention may further comprise that the registration cameras are CMOS (complementary metal-oxide-semiconductor) cameras.

The invention uses set of images obtained with such standard image registration methods (CCD or CMOS) in such that the registration cameras are placed in such position that their optical axes intersects each other. A virtual model of the cameras optical axes is formed, whereby the positions of the cameras optical axes are described by the equations of the straight line in 3D space. While the eye identification is carried out the distance of its center to the center of the image is calculated (in pixels). This is carried out for all images of the image set. After that the position of eye in 3D space is calculated using the virtual model and distance from eye center to optical axes of registration cameras (calculated on the previous step).

Thus the invention allows estimating a 3D position of the eyes using a set of images.

The registration area (at which these calculations are carried out) could be greatly expanded in the proposed registration scheme and calculation method. Furthermore the proposed method do not need any preliminary calibration and can be used in different eye registration schemes (dark pupil / light pupil) also allowing to make the registration hardware part compact.

The main advantages of the invention are that no calibration needed for 3D eye position estimation and the area of the registration is not restricted. The accuracy of the calculations is defined only with the accuracy of 3D positions of optical axes toward each other (the accuracy of the coefficients of the equations of optical axes in a virtual model). In principle, any degree of accuracy can be achieved.

The invention will now be described in more detail by several embodiments and corresponding figures.

### BRIEF DESCRIPTION OF THE DRAWINGS

Fig. 1 illustrates a system for 3D position estimation of an user's eye according to the invention,
FIG.2 illustrates the eye movement registration region (shown as a shaded area) which is the cross area of linear fields of registration cameras and at which the registration is carried out.
Fig. 3 illustrates three images taken by the three cameras at different positions.
Fig. 4 is a flow chart depicting sequential steps of estimation of 3D position of user's eye in space.

### BRIEF DESCRIPTION OF THE INVENTION

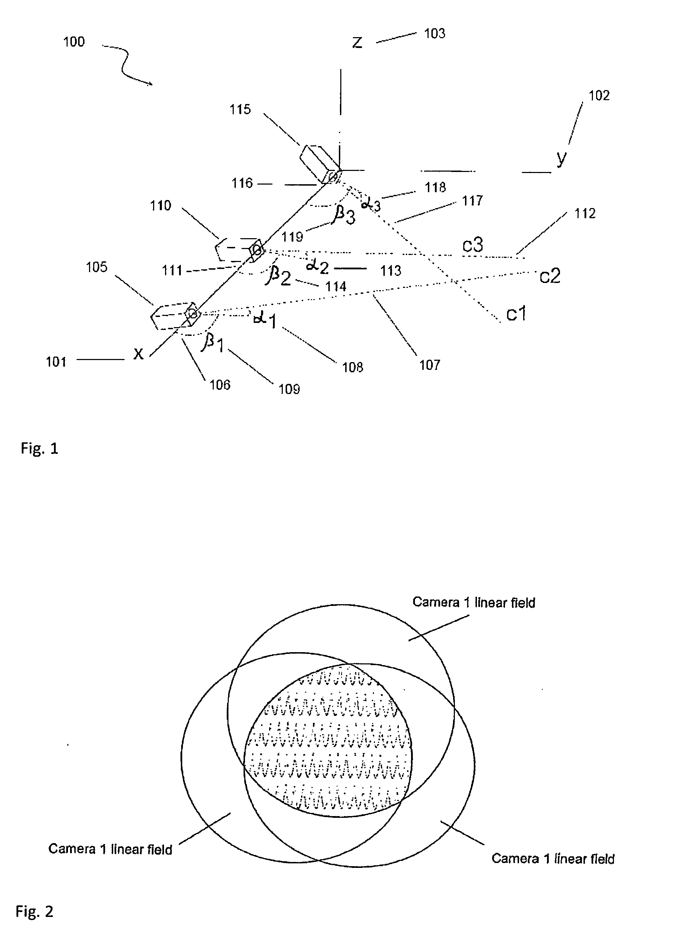

Fig. 1 illustrates a calibration-free system for estimation of 3D position of an user's eye according to a preferred embodiment of the invention.

The system 100 comprises of three digital CCD-cameras 105, 110 and 115, which are places in different positions 106, 111 and 116, respectively. Each position of the cameras can be described in 3D-coordinates in X (101), Y (102) and Z (103) coordinates. Such a position of each camera can be obtained by GPS-means attached to or integrated in the registration cameras.

For estimation of the 3D position of the user's eye the CCD-cameras 105, 110 and 115 have to be placed such as that their optical axes 107, 112, and 117 intersects each other.

Furthermore a geometrical model of the positions 106, 111 and 116 is created for describing the optical axes 107, 112, and 117 in terms of vectors. For this purpose the offset of each of the optical axes 107, 112, and 117 to the object is described via angels α any β each. For example the camera 105 at position 106 is described by the GPS-coordinates of the camera 105 and the offset angels α₁ 107 and β₁ 108. All data for each camera are implemented into the virtual model of the camera positions.

For the estimation of the 3D position of the user's eye in space several images are captured by the three cameras 105, 110 and 115 respectively. After that the captured images are processed by a processing apparatus, which is not depicted within the figures, for obtaining image data. While the eye identification is carried out by image capturing the distance of the center of the optical axes 107, 112, and 117 to the center of the image is calculated. This is carried out for all images of the image set. After that the position of eye in 3D space is calculated using the virtual model and distance from eye center to optical axes of registration cameras 107, 112, and 117.

Fig.2 illustrates position of linear fields of registration cameras towards each other with the orientation of optical axis shown in FIG.1 (the case for three cameras is shown). The registration of eye movements is carried out in the shaded area shown in the figure. The registration space can be changed by varying the shaded area according to accuracy, linear dimensions of registration space or other requirements.

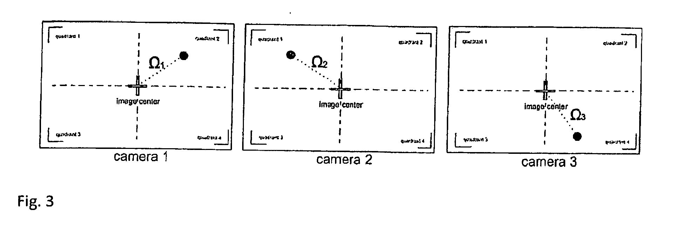

Fig.3 illustrates three images of the object taken by cameras 105, 110 and 115 respectively. As depicted the distance of the image center to the object is described by 'Ω for camera 105, 'Ω2 for camera 110 and 'Ω3 for camera 115. By determining the distances 'Ω1-3 of the center image to the object this data is implemented into the mathematical model for estimation of 3D position of user's eye. This information is combined with the coordinates of the cameras 105, 110 and 115 and the equations describing the optical axes 107, 112 and 117 I terms of vectors. Thus the 3D position of the user's eye in space can be estimated.

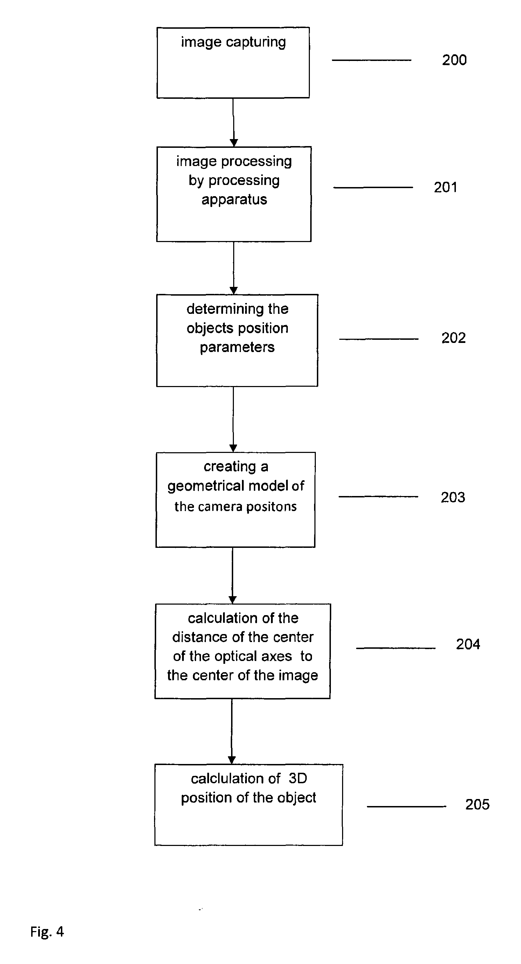

Fig. 4 is a chart flow depicting the several steps of the estimation of the 3D position of the user's eye in space.

Furthermore an iteration loop can be implemented for particularly complicated cases (for estimating the 3D position in images which contain uncertainties, for example, when two eyes are too close to each other, or images of eye have some artifacts), or to achieve a higher precision (what is important for far distances).

### Reference numbers

- 100: system for estimation of 3D position of user's eye in space
- 101: x-axes
- 102: y-axes
- 103: z-axes
- 105: registration camera 1
- 106: position of registration camera 1
- 107: optical axes of cameras 1
- 108: offset angel α₁ of registration camera 1
- 109: offset angel β₁ of registration camera 1
- 110: registration camera 2
- 111: position of registration camera 2
- 112: optical axes of cameras 2
- 113: offset angel α₂ of registration camera 2
- 114: offset angel β₂ of registration camera 2
- 115: registration camera 3
- 116: position of registration camera 3
- 117: offset angel α₃ of registration camera 3
- 118: offset angel β₃ of registration camera 3
- 200: step 1 of estimation of position of user's eye in space
- 201: step 2 of estimation of position of user's eye in space
- 202: step 3 of estimation of position of user's eye in space
- 203: step 4 of estimation of position of user's eye in space
- 204: step 5 of estimation of position of user's eye in space
- 205: step 6 of estimation of position of user's eye in space

## Claims

1. A calibration-free method of processing image data in a processing apparatus to perform estimation of 3D position of the eye in space across a set of images comprising image capturing for photographing one object with at least three digital cameras (105, 110, 115) and steps of
i) image capture,
ii) performing image processing with estimation of objects borders and objects position in the current image,
iii) determining the objects position parameters,
iv) creating the geometrical model which is connected with spatial cameras positions (106, 111 and 116),
v) calculating 3D position of object using the set of parameters obtained from multiple images and the geometrical model.

2. The method according to claim 1, wherein the step of image capturing further comprise registration cameras (105, 110 and 115) maintained in different positions (106, 111 and 116) and under different angles towards the object and each other in a way such that the optical axes of the cameras (107, 112 and 117) form intersection straight lines.

3. The method according to claim 1 or 2, wherein the step of image capturing further comprise different configurations of registration cameras (105, 110 and 115).

4. The method according one of the preceding claims, wherein the step of image processing further comprise finding the point of interest, which belongs to the object, and estimating such parameter, as distance from the image center to this point.

5. The method as claimed in claim 4, wherein the step of image processing further comprises that the estimated parameter, obtained by image processing, corresponds to the distance between the image center and some objects point, whereby the distance is obtained in pixels.

6. The method according one of the preceding claims, wherein the step of creation of virtual geometrical model further comprise that the 3D position of optical axes (107, 112 and 117) of registration cameras (105, 110 and 115) are defined in world coordinates.

7. The method of according to claim 6, wherein the step of creation of virtual geometrical model further comprises defining the optical axes (107, 112 and 117) in 3D space can be obtained in the world coordinate system in a vector-parametric form.

8. The method according to one of the claims 6 and 7, wherein the step of creation of virtual geometrical model comprises that the equations of the optical axes (107, 112 and 117) of the image registration cameras (105, 110 and 115) are obtained in the coordinate system, which is connected with the cameras.

9. The method according one of the preceding claims, wherein the 3D space position of the point of interest is calculated using a set of equations.

10. The method according to claim 9, wherein 3D space position of the point of interest is calculated by using the distance from the image center to the point of interest position in the image as an additional term for object recognition.

11. The method according one of the preceding claims, wherein the position is calculated towards the image registration camera's optical axes (107, 112 and 117 in a calculation of the 3D space position of the object's point of interest).

12. The method according to claim 11, wherein the 3D space position is used to verify the analysis of position of the point of interest towards the image center.

13. A system for calibration-free estimation of 3D position of an user's eye in space comprising:
i) at least three registration cameras (105, 110 and 115) for image capturing of at least one of an user's eye, said image having objects borders and objects position in the current image; wherein the cameras (105, 110 and 115) are placed in such positions (106, 111 and 116) that their optical axes (107, 112 and 117) intersects each other,
ii) a processing apparatus for performing image processing with estimation of objects borders and objects position in the current image, determining the objects position parameters, creating the geometrical model which is connected with spatial cameras positions (106, 111 and 116), calculating 3D position of object using the set of parameters obtained from multiple images and the geometrical model.

14. The system according to claim 13, wherein the processing apparatus is a personal computer.

15. The system according to one of the claims 13 and 14, wherein the registration cameras (105, 110 and 115) are CCD cameras.

16. The system according to one of the claims 13 and 14, wherein the registration cameras (105, 110 and 115) are CMOS cameras.
